# EUROPEAN PATENT SPECIFICATION

(11) **EP 1 276 192 B1**
(45) Date of publication and mention of the grant of the patent: **20.10.2004**
(21) Application number: 02014693.2
(22) Date of filing: 03.07.2002
(51) Int. Cl.: H02B 1/46, B62M 25/08

(54) **Intermediate connection unit usable on board of a bicycle**
Verbindungseinheit für ein Fahrrad
Elément de jonction pour bicyclette

(30) Priority: 11.07.2001 IT TO20010678
(43) Date of publication of application: 15.01.2003
(73) Proprietor: Campagnolo Srl, 36100 Vicenza (VI) (IT)
(72) Inventor: Meggiolan, Mario, 36051 Creazzo (Vicenza) (IT)
(74) Representative: Riccardi, Elisa

(56) References cited:
- US-A- 4 490 127
- US-A- 5 470 277
- US-A- 5 681 234

## Description

The present invention relates to an intermediate connection unit usable on board of a bicycle equipped with front derailleur and rear derailleur which are provided with electrical actuators, including a box for containing an electronic control unit that is connectable to the aforesaid two electrical actuators, said box being designed to be mounted on the bicycle frame.

A device of the type specified above has already been proposed in the prior Italian patent application No. TO2000A000430 in the name of the present applicant, filed on May 9, 2000 and still secret at the priority date of the present application. In the said device, the box containing the electronic control unit is mounted on the down tube of the bicycle frame in a position corresponding to the area of fixing of the bottle cage. Associated to the box for containing the electronic control unit is a battery holder. In the further Italian patent application No. TO2000A000869, once again in the name of the present applicant, filed on September 15, 2000, and also this still secret at the priority date of the present application, the applicant has proposed an improvement of the known device, which envisages a fast connection between the battery holder and the box containing the electronic control unit, which also enables fast electrical connection between the power-supply batteries and the electronic control unit.

In the previously proposed solution, the electronic control device is designed to be connected both to the actuator of the front derailleur of the bicycle and to the actuator of the rear derailleur for motor-driven control of said derailleurs. It is to be noted that an electronically controlled motor-driven gear-change solution that uses electrical actuators for controlling the front derailleur and the rear derailleur has for some time been proposed by the present applicant and is described and illustrated in the US patent No. 5 470 277 and in equivalent patents granted in other countries.

In the solution previously proposed by the present applicant, with the box of the electronic control device mounted on the down tube of the bicycle frame in a position corresponding to the area of anchorage of the bottle cage, from the box of the electronic control unit there exit two cables which are designed to be connected one to the electrical actuator of the front derailleur and the other to the electrical actuator of the rear derailleur. In the practical embodiments studied by the present applicant, the connection of the two cables for connection to the electronic control unit is made by embedding the terminal part of the cables in the plastic material that forms the body of the box, so as to obtain hermetically sealed connections. This gives rise to a corresponding complication in the operations of wiring of the control unit and involves the added drawback of an aesthetic nature deriving from the arrangement of two connection cables on the outside of the down tube of the bicycle frame.

US-A-5,681,234 discloses an automatic transmission shifter for velocipedes comprising a controller that receives signals from two sensors along respective cables, processes them and generates signals that are emitted; along a respective cable, to a power unit that, through mechanical tension cables, controls the front and rear actuators.

The three cables connected to the controller are enclosed in a common sheath for a first length.

With such an arrangement, however, a large sheath member needs to be embedded in the casing of the controller, so as to obtain an hermetically sealed connection. The three cables also need to be branched-off within the controller casing, still with complicated wiring operations. Moreover, to disconnect the actuators and/or sensors, e.g. for replacement or repairing of such components or for replacement of their respective cables, the entire controller needs to be opened and dismounted.

The invention solves the above drawbacks by providing for an intermediate connection unit having the features recited in independent claim 1.

Thanks to the arrangement of the aforesaid intermediate connection unit, from the box of the electronic control unit there exits a single cable directed towards the two electrical actuators for controlling the bicycle derailleurs, whilst the intermediate connection unit, from which there exit two cables, one directed to the front derailleur and the other to the rear derailleur, can be set in an area of the frame less in view. In a preferred embodiment of the invention, the casing of the intermediate connection unit is designed to be mounted underneath the bottom-bracket shell or crank case of the bicycle. In this position, bicycles with flexible-cable gear control are provided with an auxiliary support for guiding the two control cables, i.e., that of the front derailleur and that of the rear derailleur. In the case of the present invention, in place of the said support there is mounted the casing of the aforesaid intermediate connection unit, the said unit being connected to the electronic control unit by means of a single connection cable and having at least two outputs connected to the two electrical actuators. Of course, the intermediate connection unit can be provided also with other outputs, for example for connection to accessory members, such as sensors or the like, as well as with other inputs in addition to that connected to the control unit.

Thanks to the above characteristics, the wiring of the electronic control unit is simpler, and the device is also improved from the aesthetic point of view in that it envisages a single cable set on the outside of the down tube of the bicycle frame.

Further characteristics and advantages of the present invention will emerge from the ensuing description, with reference to the attached drawings, provided purely by way of non-limiting example, in which:
- Figure 1 is a schematic perspective view illustrating the intermediate connection unit and the electronic assembly according to the invention mounted on a bicycle frame;
- Figure 2 illustrates a detail of Figure 1, according to a possible variant, and
- Figure 3 illustrates an enlarged view of the intermediate connection unit according to the present invention.

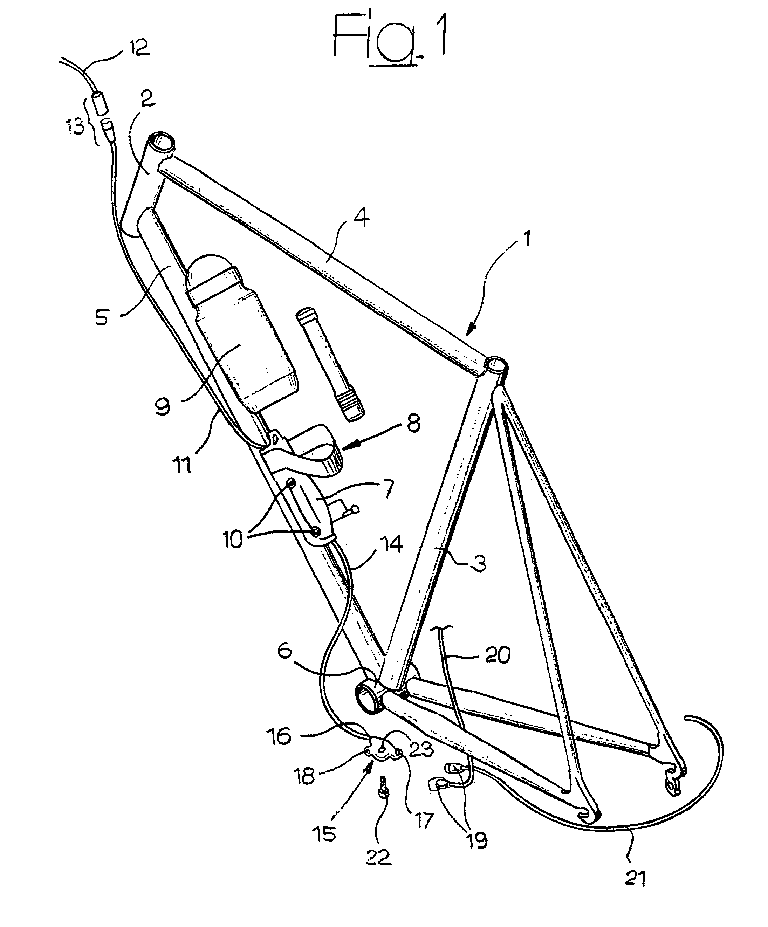

In Figure 1, the reference number 1 designates, as a whole, a bicycle frame comprising a head tube 2 and a seat tube 3 connected together by a top tube 4 and a down tube 5. The frame includes a bottom-bracket shell (or crank case) 6 where the down tube 5 and seat tube 3 converge.

In line with what illustrated in the prior Italian patent application No. TO2000A000430 in the name of the present applicant, the assembly comprises a box 7 containing an electronic control unit which governs two electrical actuators (not illustrated) for operating the front derailleur and the rear derailleur of the bicycle in a motor-driven gear-change system of the type forming the subject of the US patent No. 5 470 277 in the name of the present applicant. The electronic control unit is moreover designed to be connected to an on-board computer typically mounted on the handlebars of the bicycle and to the push-buttons for actuating the front derailleur and the rear derailleur, the said push-buttons being preferably integrated in the brake-lever supports, which are also mounted on the handlebars of the bicycle, according to a solution also already envisaged in the US patent mentioned above and further developed in the subsequent patents held by the present applicant.

Again according to the teachings of the prior Italian patent application TO2000A000430, the box 7 of the electronic control unit is built into an assembly 8 for supporting a bottle cage 9, which is fixed to the down tube 5 by means of screws 10 that engage the usual holes traditionally provided in the down tube 5 for fixing the bottle-cage assembly.

Exiting from the box 7 of the electronic control unit is a single cable 11 for connection to the cycle computer, which is provided with a cable 12 of its own connected to the cable 11 by means of a connector 13 and a single cable 14 for connection to the two electric actuators of the bicycle derailleurs. Both of the cables 11, 14 have their end portions embedded in the body made of plastic material forming the box 7 so as to ensure that the connection is hermetically sealed.

As already said, the connection of the electronic control unit to the two electrical actuators is obtained by means of a single cable 14 which extends along the down tube 5. This can be obtained in so far as, according to the present invention, between the electronic control unit and the two actuators, there is set an intermediate connection unit 15 having a single input 16 connected to the cable 14 and two outputs 17, 18 designed to be connected to the connectors 19 of two cables 20, 21 for electric power supply of the electrical actuators of the front derailleur and the rear derailleur, respectively.

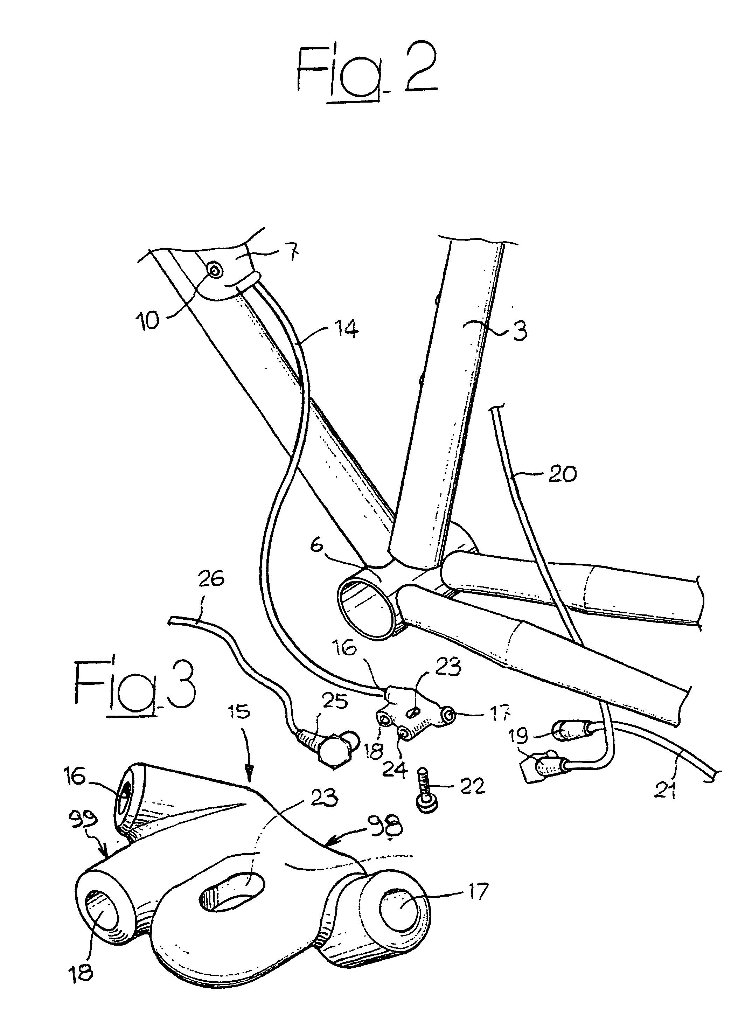

The intermediate connection unit 15 (see fig.3) presents a casing 99 made of plastic material so as to ensure that its content is hermetically sealed. The casing 99 presents a shape with curved portions 98, so that it can be easily connected to a cylindrical fixing member, and a through hole 23. The intermediate connection unit 15 is mounted underneath the crank case 6 by means of a screw 22 which engages the hole 23 of the casing 99 and a threaded hole made in the wall of the crank case 6 but, due to the shape of its casing 99, it is clear that the intermediate connection unit 15 can be fixed to any part of the bicycle.

Figure 2 illustrates a variant in which the intermediate connection unit 15 has an auxiliary output 24 for connection of an auxiliary connector 25 connected, by means of a cable 26, to an auxiliary member, such as a sensor device for a cycle parameter (such as pedal cadence) provided on the bicycle.

The intermediate connection unit 15 can present other inputs and other outputs, in any number, so as to realise a "switchboard", having any number of inputs and any number of outputs to which sensors, actuators, control units and so on can be connected.

It is also to be noted that the inputs (16) and the outputs (17, 18, 24) of the intermediate connection unit 15 can be of the permanent type (or fixed) or of the detachable type, so that the cables 14, 20, 21 and 26 can be easily connected to the intermediate connection unit 15 and easily disconnected from it. It is also possible that some of the inputs and/or outputs are of the permanent type and the remaining ones of the detachable type.

The advantages of the described intermediate connection unit are clear. In particular, the shape of the casing allows that the unit can be fixed to any part of the bicycle and that allows to have the minimum of cables on the frame of the bicycle, since the needed number of cables can be branched-off only in the needed locations (near to the sensors and/or the actuators). Further, the detachable connections allow that the sensors and the actuators can be very easily disconnected from the unit and replaced or repaired, without the need to dismount the entire intermediate connection unit.

Forming the subject of the present invention is also an electronic control assembly and a bicycle incorporating the intermediate connection unit described above.

Of course, without prejudice to the principle of the invention, the details of construction and the embodiments may vary widely with respect to what is described and illustrated herein purely by way of non-limiting example, without thereby departing from the scope of the present invention.

## Claims

1. An intermediate connection unit (15) of an electronic control assembly of a bicycle, comprising a casing (99) having:
- means (23) for attachment to the bicycle frame (1),
- at least one input cable connection (16), and
- at least two output cable connections (17, 18, 24),
**characterized by** the casing further comprising:
- means for branching-off the at least one input cable connection (16) into the at least two output cable connections (17, 18, 24).

2. The intermediate connection unit according to Claim 1, **characterized by** comprising one or more additional input and/or output cable connections.

3. The intermediate connection unit according to Claim 2, **characterized by** comprising one input cable connection (16) and three output (17, 18, 24) cable connections.

4. The intermediate connection unit according to Claim 1, **characterized in that** said input cable connections (16) and said output cable connections (17, 18, 24) are all of the permanent type.

5. The intermediate connection unit according to Claim 1, **characterized in that** said input cable connections (16) and said output cable connections (17, 18, 24) are all of the detachable type.

6. The intermediate connection unit according to Claim 1, **characterized in that** some of the input cable connections (16) and/or some of the output cable connections (17, 18, 24) are of the permanent type and the remaining ones are of the detachable type.

7. The intermediate connection unit according to Claim 1, **characterized in that** said casing (99) is hermetically sealed.

8. The intermediate connection unit according to Claim 1, **characterized in that** said casing (99) is made of a plastic material.

9. The intermediate connection unit according to Claim 1, **characterized in that** said casing (99) presents curved portions (98).

10. The intermediate connection unit according to Claim 1, **characterized in that** said casing (99) presents a through hole (23).

11. The intermediate connection unit according to Claim 1, **characterized in that** said casing (99) is shaped and designed to be mounted underneath the crank case (6) of the bicycle.

12. An electronic control assembly for a bicycle, **characterized by** comprising an intermediate connection unit (15) according to any one of the preceding claims.

13. The assembly according to Claim 12, **characterized in that** the two output cable connections (17, 18) are designed for connection to the connectors (19) carried by the respective cables of two electrical actuators.

14. The assembly according to Claim 12, **characterized in that** the input cable connection (16) is connected, by a cable (14) to a control unit.

15. A bicycle, **characterized by** comprising an intermediate connection unit according to one or more of the claims from 1 to 11.

## Patentansprüche

1. Zwischenverbindungseinheit (15) einer elektronischen Steueranordnung eines Fahrrads, umfassend ein Gehäuse (99), mit:
- einer Einrichtung (23) zum Befestigen an dem Fahrradrahmen (1),
- mindestens eine Eingangskabelverbindung (16) und
- mindestens zwei Ausgangskabelverbindungen (17, 18, 24),
**gekennzeichnet dadurch, dass** das Gehäuse weiterhin aufweist:
eine Einrichtung zum Abzweigen der mindestens einen Eingangskabelverbindung (16) in die mindestens zwei Ausgangskabelverbindungen (17, 18, 24).

2. Zwischenverbindungseinheit nach Anspruch 1, **dadurch gekennzeichnet, dass** sie eine oder mehrere zusätzliche Eingangs- und/oder Ausgangskabelverbindungen aufweist.

3. Zwischenverbindungseinheit nach Anspruch 2, **dadurch gekennzeichnet, dass** sie eine Eingangskabelverbindung (16) und drei Ausgangskabelverbindungen (17, 18, 24) aufweist.

4. Zwischenverbindungseinheit nach Anspruch 1, **dadurch gekennzeichnet, dass** die Eingangskabelverbindungen (16) und die Ausgangskabelverbindungen (17, 18, 24) alle von dem permanenten Typ sind.

5. Zwischenverbindungseinheit nach Anspruch 1, **dadurch gekennzeichnet, dass** die Eingangskabelverbindungen (16) und die Ausgangskabelverbindungen (17, 18, 24) alle von dem lösbaren Typ sind.

6. Zwischenverbindungseinheit nach Anspruch 1, **dadurch gekennzeichnet, dass** einige der Eingangskabelverbindungen (16) und/oder einige der Ausgangskabelverbindungen (17, 18, 24) von dem permanenten Typ sind und die verbleibenden von dem abnehmbaren Typ sind.

7. Zwischenverbindungseinheit nach Anspruch 1, **dadurch gekennzeichnet, dass** das Gehäuse (99) hermetisch abgedichtet ist.

8. Zwischenverbindungseinheit nach Anspruch 1, **dadurch gekennzeichnet, dass** das Gehäuse (99) aus einem Kunststoffmaterial hergestellt ist.

9. Zwischenverbindungseinheit nach Anspruch 1, **dadurch gekennzeichnet, dass** das Gehäuse (99) gekrümmte Bereiche (98) besitzt.

10. Zwischenverbindungseinheit nach Anspruch 1, **dadurch gekennzeichnet, dass** das Gehäuse (99) ein Durchgangsloch (23) besitzt.

11. Zwischenverbindungseinheit nach Anspruch 1, **dadurch gekennzeichnet, dass** das Gehäuse (99) so geformt und ausgelegt ist, um unterhalb des Kurbelgehäuses (6) des Fahrrads montiert zu werden.

12. Elektronische Steueranordnung für ein Fahrrad, **dadurch gekennzeichnet, dass** es eine Zwischenverbindungseinheit (15) nach einem der vorhergehenden Ansprüche aufweist.

13. Anordnung nach Anspruch 12, **dadurch gekennzeichnet, dass** die zwei Ausgangskabelverbindungen (17, 18) für eine Verbindung mit den Verbindern (19), getragen durch die jeweiligen Kabel von zwei elektrischen Betätigungseinrichtungen, ausgelegt sind.

14. Anordnung nach Anspruch 12, **dadurch gekennzeichnet, dass** die Eingangskabelverbindung (16) über ein Kabel (14) mit einer Steuereinheit verbunden ist.

15. Fahrrad, **dadurch gekennzeichnet, dass** es eine Zwischenverbindungseinheit nach einem oder mehreren der Ansprüche 1 bis 11 aufweist.

## Revendications

1. Elément de jonction intermédiaire (15) d'un assemblage électronique de commande d'une bicyclette, comprenant une enveloppe (99) ayant :
des moyens (23) pour une fixation au cadre (1) de la bicyclette,
au moins une jonction de câble d'entrée (16), et
au moins deux jonctions de câble de sortie (17, 18, 24),
**caractérisé en ce que** l'enveloppe comprend en outre :
des moyens pour raccorder la au moins une jonction de câble d'entrée (16) aux au moins deux jonctions de câble de sortie (17, 18, 24).

2. Elément de jonction intermédiaire selon la revendication 1, **caractérisé en ce qu'**il comprend une ou plusieurs jonctions de câble d'entrée et/ou de sortie supplémentaires.

3. Elément de jonction intermédiaire selon la revendication 2, **caractérisé en ce qu'**il comprend une jonction de câble d'entrée (16) et trois jonctions de câble de sortie (17, 18, 24).

4. Elément de jonction intermédiaire selon la revendication 1, **caractérisé en ce que** lesdites jonctions de câble d'entrée (16) et lesdites jonctions de câble de sortie (17, 18, 24) sont toutes du type permanent.

5. Elément de jonction intermédiaire selon la revendication 1, **caractérisé en ce que** lesdites jonctions de câble d'entrée (16) et lesdites jonctions de câble de sortie (17, 18, 24) sont toutes du type amovible.

6. Elément de jonction intermédiaire selon la revendication 1, **caractérisé en ce que** certaines des jonctions de câble d'entrée (16) et/ou certaines des jonctions de câble de sortie (17, 18, 24) sont du type permanent et les autres sont du type amovible.

7. Elément de jonction intermédiaire selon la revendication 1, **caractérisé en ce que** ladite enveloppe (99) est scellée de manière hermétique.

8. Elément de jonction intermédiaire selon la revendication 1, **caractérisé en ce que** ladite enveloppe (99) est composée d'un matériau plastique.

9. Elément de jonction intermédiaire selon la revendication 1, **caractérisé en ce que** ladite enveloppe (99) présente des parties courbées (98).

10. Elément de jonction intermédiaire selon la revendication 1, **caractérisé en ce que** ladite enveloppe (99) présente un trou débouchant (23).

11. Elément de jonction intermédiaire selon la revendication 1, **caractérisé en ce que** ladite enveloppe (99) est façonnée et conçue pour être montée en dessous du carter de vilebrequin (6) de la bicyclette.

12. Assemblage électronique de commande pour une bicyclette, **caractérisé en ce qu'**il comprend un élément de jonction intermédiaire (15) selon l'une quelconque des revendications précédentes.

13. Assemblage selon la revendication 12, **caractérisé en ce que** deux jonctions de câble de sortie (17, 18) sont conçues pour un raccordement aux connecteurs (19) supportés par les câbles respectifs de deux actionneurs électriques.

14. Assemblage selon la revendication 12, **caractérisé en ce que** la jonction de câble d'entrée (16) est raccordée, par un câble (14), à une unité de commande.

15. Bicyclette, **caractérisée en ce qu'**elle comprend un élément de jonction intermédiaire selon l'une ou plusieurs des revendications 1 à 11.
